# EUROPÄISCHE PATENTSCHRIFT

(11) **EP 1 425 244 B1**
(45) Veröffentlichungstag und Bekanntmachung des Hinweises auf die Patenterteilung: **11.04.2007**
(21) Anmeldenummer: 02769879.4
(22) Anmeldetag: 22.08.2002
(51) Int. Cl.: C01B 3/38, C01B 3/48, B01J 8/04

(54) **KOMPAKTE REFORMEREINHEIT ZUR WASSERSTOFFERZEUGUNG AUS GASFORMIGEN KOHLENWASSERSTOFFEN IM KLEINEN LEISTUNGSBEREICH**
COMPACT REFORMER UNIT IN THE LOW PERFORMANCE RANGE, FOR PRODUCING HYDROGEN FROM GASEOUS HYDROCARBONS
UNITE DE REFORMAGE COMPACTE DESTINEE A LA PRODUCTION D'HYDROGENE A PARTIR D'HYDROCARBURES GAZEUX DANS LA GAMME DE PETITE PUISSANCE

(30) Priorität: 03.09.2001 DE 10142999
(43) Veröffentlichungstag der Anmeldung: 09.06.2004
(73) Patentinhaber: Zentrum Für Brennstoffzellen Technik ZBT Duisburg GmbH., 47058 Duisburg (DE)
(72) Erfinder: Mahlendorf, Falko, 47804 Krefeld (DE); Roes, Jürgen, 46499 Hamminkeln (DE); Mathiak, Jens, 44579 Castrop-Rauxel (DE)
(74) Vertreter: Viering, Jentschura & Partner
(86) Internationale Anmeldenummer: PCT/DE2002/003064
(87) Internationale Veröffentlichungsnummer: WO 2003/024867

(56) Entgegenhaltungen:
- EP-A- 0 922 666
- EP-A- 1 094 031
- DE-A- 10 057 537
- US-A- 6 162 267

## Beschreibung

Die Erfindung richtet sich auf eine Reformereinheit zur Wasserstofferzeugung aus einem Edukt aus einem Kohlenwasserstoff-Wasser-Gemisch.

Nachstehend ist ein kompakter Wasserdampfreformer, der aus Kohlenwasserstoffen oder Kohlenwasserstoffderivaten unter Zuführung von Wasser ein wasserstoffreiches Produktgas erzeugt, beschrieben. Das Produktgas kann z.B. in einer Brennstoffzelle eingesetzt werden, wo Strom und Wärme entstehen.

Der Reformer eignet sich bevorzugt zur Herstellung eines wasserstoffhaltigen Produktgases zur Versorgung von Brennstoffzellen im stationären, dezentralen Leistungsbereich. Die Anlagengrößen reichen von der Stromerzeugung im MW-Bereich über Blockheizkraftwerke mit einigen hundert kW zur Kraft-Wärme-Kopplung bis zu einer elektrischen Leistung von 1 - 10 kW zur Einzelversorgung von Ein- und Mehrfamilienhäusern. Insbesondere können Hausenergieversorgungsanlagen auf der Basis des Brennstoffs Erdgas zur Strom- und Wärmeversorgung von Haushalten hergestellt werden. Hinsichtlich der Abmessungen besteht prinzipiell die Möglichkeit, das Gesamtsystem in eine Wandtherme zu integrieren. Zur Darstellung von effizienten Wasserstofferzeugungsreaktoren für die genannten Anwendungsfälle müssen die Wärmequellen, Wärmesenken und Temperaturniveaus innerhalb des Reaktors optimal aufeinander abgestimmt werden, um Wärmeverluste an die Umgebung auf ein Minimum zu reduzieren.

Es ist bekannt, dass durch Dampfreformieren von Kohlenwasserstoffen, insbesondere von Methan als Hauptbestandteil von Erdgas, ein wasserstoffhaltiges Produktgas hergestellt werden kann.

Die Wasserdampfreformierung läuft im Wesentlichen nach den zwei unabhängigen Reaktionsgleichungen

*CH*₄ + *H*₂*O* → CO + 3*H*₂ *Δ_{R} H*⁰ = 206 kJ/mol, (1)

*CH*₄ + 2*H*₂*O* → *CO*₂ + 4*H*₂ *Δ_{R} H*⁰ = 165 kJ/mol, (2)

unter Wärmezufuhr an einem Katalysator (z.B. Ni oder Pt) bei Reaktionstemperaturen von 600 - 950 °C ab. Die Wärmezufuhr erfolgt über einen Brenner, der mit den genannten Brenngasen betrieben wird. Da sich abhängig von den Reaktionsparametern Druck, Temperatur und Wasserdampfüberschuss nach der Reformierstufe Konzentrationen an CO bis über 10 vol.-% einstellen, werden oft zwei weitere Reaktionsstufen nachgeschaltet, um den Kohlenmonoxidanteil zu vermindern und weiteren Wasserstoff zu gewinnen, die sogenannten Shift-Konverter. Die Konvertierung erfolgt nach der exothermen homogenen Wassergasreaktion

*CO* + *H*₂*O* → *CO*₂ + *H*₂ Δ*_{R} H*⁰ = - 41 kJ/mol (3)

in zwei Temperaturstufen, dem Hochtemperaturshift (HT-Shift) an einem Fe/Cr-Katalysator bei Temperaturen zwischen 330 und 500 °C und dem Niedertemperaturshift (NT-Shift) an einem Cu/Zn-Katalysator bei 190 bis 280 °C. Danach enthält das wasserstoffreiche Gasgemisch noch einen Kohlenmonoxidanteil von etwa 0,5 - 1 %.

Im Ergebnis der industriellen Dampfreformierung von Erdgas wird ein Produktgas erhalten, welches in etwa zu 75% aus Wasserstoff besteht.

Bei der Erdgas-Wasser-Reformierung ist die Einbringung der Reaktionswärme der limitierende Faktor und daher der Focus bei der Entwicklung technischer Apparate und Anlagen. Großtechnisch werden meist Rohrreaktoren eingesetzt, die zwecks Modularität von außen durch ein heißes Rauchgas beheizt werden. Ein-derartiger Reaktor zur Wasserdampfreformierung von Ergas ist aus der Patentschrift US 5 229 102 bekannt. Dabei wird das Eduktgas durch ein mit Katalysator gefülltes doppelwandiges Rohrsystem geführt, in dem die Reformierreaktionen ablaufen. Der Wasserstoff wird selektiv aus dem Reformierungsraum durch das porös ausgestaltete Innenrohr in einen Wasserstoffabzugsraum abgezogen. Der Reformierungsreaktionsraum wird durch das heiße Rauchgas mehrerer außen liegender Brenner beheizt. Eine Verschaltung der internen Wärmeströme und eine Integration von Shiftstufen in den Reformer ist nicht vorgesehen.

Bei einem in der Patentschrift EP 0195 688 beschriebenen Wasserdampfreformer wird die zur Reformierung benötigte Wärme durch einen zentralen Brenner, der von einem keramischen Rohr umgeben ist, bereitgestellt. Das heiße Rauchgas strömt in einem Ringspalt zwischen dem Brennerrohr und einem konzentrisch dazu angeordneten zweiten Reformierungsraum, wobei Rauchgas und Edukt (Brenngas/Wasserdampf-Gemisch) im Gleichstrom geführt werden. Im weiteren Strömungsverlauf überträgt das Rauchgas im Gegenstrom zusätzliche Wärme auf das Eduktgemisch, das einen konzentrisch zum zweiten Reformierungsraum angeordneten und mit diesem strömungstechnisch verbundenen ersten Reformierungsraum durchströmt.

Weitere Reformierreaktoren werden in der Patentschrift US 5 164 163 beschrieben. Bei der dort dargestellten, zylindrisch aufgebauten Reformiervorrichtung, ist zentral im Inneren der Vorrichtung ein Brenner zur Erzeugung von heißem Rauchgas angeordnet. Das Eduktgemisch aus Brenngas und Wässerdampf wird durch zwei den Brenner umschließende Doppelmantelrohre, die einseitig miteinander verbunden sind, geführt.

Bei einer in der Patentschrift DE 197 21 630 C1 beschriebenen Vorrichtung wird ein Strahlungsbrenner eingesetzt, um den aus zwei Teilen aufgebauten Reformierreaktor von außen flächig zu beheizen. Der Reformierreaktor besteht aus einem inneren Rohrreaktor und einem diesen in einem Abstand umschließenden Ringspaltreaktor. Das heiße Rauchgas wird im Spalt zwischen Rohrreaktor und Ringspaltreaktor im Gegenstrom zum Erdgas im Rohrreaktor geführt. Die Edukte werden dem Rohrreaktor durch einen als Rohrwendel ausgeführten Wärmetauscher zugeführt, und werden dort durch das im Gegenstrom geführte Rauchgas erwärmt. Eine Nutzung der fühlbaren Wärme des wasserstoffhaltigen Produktgases und eine Integration von Shiftstufen in den Reformer ist nicht vorgesehen.

Im Stand der Technik bekannte Anlagen zur Wasserstofferzeugung können nicht durch ein einfaches Scale-Down verkleinert werden, da in diesem Fall überproportional hohe Wärmeverluste auftreten. Für Anwendungen im Hausenergieversorgungsbereich bestehen darüber hinaus hohe Anforderungen an Dynamik und Bauvolumen.

Aus der EP-A-0 922 666 ist eine Reformereinheit zur Wasserstofferzeugung aus einem Kohlenwasserstoff-Wasser-Gemisch bekannt. Diese Reformereinheit umfasst einen Behälter mit einer Leitung zur Zufuhr eines Eduktes in den Behälter. Weiterhin weist die Reformereinheit einen an der Edukt-Leitung angeschlossenen Wärmetauscher mit einem ersten Rohr und einem zweiten Rohr auf, wobei an dem ersten Rohr des Wärmetauschers ein zweiter Wärmetauscher um den Reformer herum angeordnet und eine Leitung zwischen dem zweiten Wärmetauscher und dem Reformer vorgesehen ist. Der Reformer umfasst einen darin angeordneten Katalysator, der mittels eines Brenners erhitzbar ist, sowie eine Ableitung zwischen dem Reformer und dem zweiten Rohr des ersten Wärmetauschers sowie eine Produktableitung aus dem Shiftreaktor und einer Ableitung für das Rauchgas.

Demgegenüber liegt der Erfindung die Aufgabe zugrunde, eine Lösung für eine kompakte Reformereinheit mit einem thermisch integrierten Design bereit zu stellen, welche eine Verbesserung des Wärmetauschs zwischen dem Edukt einerseits und dem Rauchgas und dem Produktgas andererseits ermöglicht.

Diese Aufgabe wird gelöst durch eine Reformereinheit zur Wasserstofferzeugung aus einem Edukt aus einem Kohlenwasserstoff-Wasser-Gemisch mit:
a. einem Reaktorbehälter;
b. einer Zuführungsleitung zur Zuführung eines Eduktes in den Reaktorbehälter;
c. einem an der Eduktzuführungsleitung angeschlossenen Wärmetauscher als Koaxialwärmetauscher mit einem ersten, äußeren Rohr, das an der Zuführungsleitung angeschlossen ist, und einem zweiten, inneren Rohr;
d. einem weiteren, an dem ersten Rohr des Wärmetauschers angeschlossenen Wärmetauscher, der um einen Reformierraum angeordnet ist;
e. einer an dem Wärmetauscher angeschlossenen Leitung mit mindestens einer Austrittsöffnung zur Zuführung des gasförmigen Eduktes in den Reformerraum mit einer darin angeordneten Katalysatoreinheit, die von einem Brenner erhitzbar ist;
f. mindestens einer Abführungsleitung für das Abführen des im Reformierraum gebildeten Reformates zum zweiten Rohr des Wärmetauschers, das anderenends an einem Shiftreaktor, angeschlossen ist; sowie
einer Produktabführungsleitung für das aus dem Shiftreaktor abgeführte Produktgas und mindestens einer Abführungsleitung für das Rauchgas aus dem Reaktorbehälter.

Durch die Erfindung wird somit ein kompakter und effizienter Wasserdampf-reformierungsreaktors zum Einsatz in dezentralen Brennstoffzellensystemen im kleinen Leistungsbereich bereitgestellt.

Die erfindungsgemäße Reformereinheit weist ein kompaktes Bauvolumen auf, wobei sämtliche Reaktoren und Wärmetauscher in einem Gehäuse untergebracht sind. Der Wirkungsgrad der Wasserstofferzeugung (unterer Heizwert des produzierten Wasserstoffs bezogen auf den unteren Heizwert des Brennstoffs für Reformierung und Brennerversorgung) des Reformers im Nennlastbetrieb liegt bei ca 80 % und liegt damit in der Größenordnung von großtechnischen Anlagen zur Wasserstoffproduktion.

Um die benötigte Wärme in den Reaktionsraum einzubringen, wird in der erfindungsgemäßen Ausgestaltung des Wasserdampfreformers entweder ein Strahlungsbrenner oder ein Brenner mit einer oder mehreren punktförmigen Wärmequellen eingesetzt. Das Rauchgas und das Produktgas werden gegenüber dem Eduktstrom hierbei im Gegenstrom geführt. Weiterhin sind die internen Wärmeströme des Wasserdampfreformers erfindungsgemäß so verschaltet, dass für die Regelung der Temperaturniveaus keine Kühlleitungen oder weitere Heizungen notwendig sind.

Bevorzugt wird bei einem Reformierverfahren ein Koaxialwärmetauscher eingesetzt, der ein erstes äußeres Rohr und ein zweites innerese Rohr besitzt, das von dem äußeren Rohr umgeben wird, wobei In dem äußeren Rohr das Edukt-Wasser-Gemisch in Richtung des Reformierraums geleitet wird, während in dem inneren Rohr das Reformat vom Reformerraum zum Shiftreaktor geführt wird. Gleichzeitig wird dabei die äußere Wand des äußeren Rohres mit dem heißen Rauchgas beaufschlagt, so dass beiderseits eine intensive Wärmeübertragung auf das zu erhitzende Edukt-Wasser-Gemisch erfolgt.

Die Erfindung sieht daher in Ausgestaltung eine Reformereinheit vor, bei welcher der an der Eduktzuführungsleitung angeschlossene Koaxialwärmetauscher von einem Außenrohr zur Aufnahme eines weiteren wärmeabgebenden Fluids umgeben ist, wobei jeweils die Zu- bzw. Abführungen für die wärmeabgebenden Fluide und das wärmeaufnehmende Fluid in die jeweiligen Rohre so angeschlossen sind, dass das zu erwärmende Fluid in dem Rohr im Gegenstrom zu beiden wärmeabgebenden Fluiden geführt wird.

Von Vorteil ist auch eine Ausgestaltung der Erfindung, die sich dadurch auszeichnet, dass der an der Eduktzuführungsleitung 2 angeschlossene Koaxialwärmetauscher 3 von einem Außenrohr zur Aufnahme eines weiteren wärmeabgebenden Fluids umgeben ist, wobei jeweils die Zu- bzw. Abführungen für die wärmeabgebenden Fluide und das wärmeaufnehmende Fluid in die jeweiligen Rohre so angeschlossen sind, dass das zu erwärmende Fluid in dem Rohr 3a im Gegenstrom zu beiden wärmeabgebenden Fluiden geführt wird.

Zweckmäßigerweise ist gemäß Weiterbildung der Erfindung der an der Edukt-Zuführungsleitung angeschlossene Wärmetauscher um den Shiftreaktor, der bevorzugt als Niedertemperaturshiftreaktor ausgeführt ist, angeordnet.

Weiterhin sieht die Erfindung vor, dass die Leitung mehrere Austrittsöffnungen oder einen Spalt zur Zuführung des gasförmigen Eduktes in den Reformerraum aufweist.

Schließlich zeichnet sich die Erfindung dadurch aus, dass die Produktaustrittsleitung an einer Einheit zur Reinigung des Produktgases, vorzugsweise zur Reduktion des CO-Gehaltes im Produktgas, angeschlossen ist.

Der Shiftreaktor kann als Niedertemperaturshiftreaktor, der üblicherweise im Temperaturbereich zwischen 180° und 250°C betrieben wird, oder je nach den Verhältnissen als Hochtemperaturshiftreaktor, der üblicherweise im Temperaturbereich zwischen 350° und 500°C betrieben wird, ausgeführt sein. Im Hinblick auf die kompakte Bauform des Reformers und die dadurch ermöglichte Temperaturführung im Reaktorbehälter ist die Ausführung als Niedertemperaturshiftreaktor bevorzugt.

Dem Wasserdampfreformer werden als Edukt flüssiges Wasser und Brenngas zugeführt, der Brenner wird mit Luft und Brenngas versorgt. Als Produkte werden Rauchgas und Produktgas abgeführt. Das heiße Rauchgas dient primär zur Bereitstellung der endothermen Reaktionswärme der Reformierungsreaktionen. Darüber hinaus wird im weiteren Strömungsverlauf sowohl die fühlbare Wärme des heißen Rauchgases als auch des Reformates zur Vorwärmung der Edukte (Brenngas und flüssiges Wasser) verwendet.

Die internen Wärmeströme sind so gekoppelt, dass für die Regelung der Temperaturniveaus keine Kühlleitungen oder weitere Heizungen notwendig sind. Die Regelung erfolgt über die Dosierung der Eduktströme: Die Reformertemperatur wird über die Brennleistung und die Shifttemperatur innerhalb der Grenzen über das Steam-to-Carbon (S/C)-Verhältnis geregelt. Dabei beträgt das S/C-Verhältnis bevorzugt 2-4, besonders bevorzugt 3.

Im Reaktionsbehälter sind in der Reformereinheit ein oberer Bereich und ein unterer Bereich vorgesehen, wobei im oberen Bereich sowohl die Leitungen zur Zuführung des Eduktes als auch zur Abführung des Produktgases und der des Rauchgases vorgesehen sind. Die Zuführungsleitung ist vorzugsweise direkt mit dem ersten Wärmetauscher verbunden, der bevorzugt zum Wärmeaustausch um den Shiftreaktor spiralförmig angeordnet ist.

Aus dem unteren Ende des ersten Wärmetauschers wird das erwärmte Produktgas einem zweiten Wärmetauscher zugeführt, bei dem der Wärmetausch lediglich zwischen dem aus dem Brennerraum abgeführten Rauchgas und dem im inneren des zweiten Wärmetauschers befindlichen, bereits erhitzten Produktgases erfolgt.

Aus dem zweiten Wärmetauscher wird in der Nähe des Bodens des Reaktionsbehälters das weiter erhitzte Eduktgas in den Raum um den Brenner geführt, wo das Eduktgas aus der Zuführungsleitung in den Raum um den Brenner abgegeben wird und der Reformierung in der Katalysatoreinheit unterzogen wird.

Oberhalb der Katalysatoreinheit befindet sich vorzugsweise ein Hohlraum, aus dem eine vorzugsweise in der Mitte angeordnete Abführungsleitung des Reformats dem inneren Rohr des ersten Rohraustauschers zugeführt wird und im Gegenstrom zum zugeführten Edukt geleitet wird.

Die kompakte Ausgestaltung des Wasserdampfreformers als eine Einheit aus Reformer, Reformerbrenner, Shiftreaktor und optional CO-Gasfeinreinigung kann im Leistungsbereich von 500 Watt bis 50 kW realisiert werden. In Kombination mit einer Brennstoffzelle können Hausenergieversorgungsanlagen zur Strom- und Wärmeversorgung von Haushalten dargestellt werden. Hinsichtlich der Abmessungen kann das Gesamtsystem in eine Wandtherme integriert werden.

Um die benötigte Wärme in den Reaktionsraum einzubringen, wird in den Wasserdampfreformer entweder ein Strahlungsbrenner oder Brenner mit einer oder mehreren punktförmigen Wärmequellen eingesetzt. Hierfür bietet sich eine konzentrische Anordnung an, wobei der Wärmeeintrag durch Strahlung und Konvektion realisiert wird. Rauchgas und Eduktgemisch (Brenngas und Wasser) werden hierbei im Gegenstrom geführt.

Die erreichte Reaktionstemperatur bestimmt maßgeblich den Umsatz des eingesetzten Reformerbrennstoffs zum einen durch die Lage des thermodynamischen Gleichgewichts und zum anderen durch die Erhöhung der Reaktionsgeschwindigkeit und wirkt sich dadurch massiv auf den Wirkungsgrad aus. Die Reformertemperatur kann durch die Brennerleistung geregelt werden. Durch die Verbindung von Wärmeübertragung durch Strahlung und konvektivem Wärmeübergang des Rauchgases im Gegenstrom zum Eduktstrom (Brenngas/Wasserdampf-Gemisch) lässt sich im oberen Bereich des Reformerkatalysators mit möglichst geringer Brennerleistung eine ausreichend hohe Reaktionstemperatur einstellen. Der Wirkungsgrad eines Dampfreformers hängt stark von dem Verhältnis des Brenngasstromes für die Reformierung zum benötigten Gasstrom für den Brenner ab. Je höher dieses Verhältnis ist, desto höher ist auch der Wirkungsgrad des Reformersystems.

Im ersten Wärmetauscher in der Reformervorrichtung erfolgt die Vorwärmung des Eduktes (Brennstoff und Wasser), bei Ausführung als Koaxialwärmetauscher im Ringspalt, simultan durch die Kühlung des Reformates von innen (von etwa 700 °C auf 200 °C) und durch Absenkung der Rauchgastemperatur auf der Außenseite. In der Konstruktion ist daher bevorzugt eine koaxiale Wärmetauscherwendel vorgesehen. Das heiße Reformat wird in dem inneren Rohr, das kalte Eduktgemisch in dem Zwischenraum und das heiße Rauchgas um die Wendel geführt, wobei hier Gegen- und Gleichstromführung möglich sind. Die Wärmetauscherwendel kann bevorzugt platzsparend um einen Niedertemperaturshift-Reaktor angeordnet werden. Dadurch ist gleichzeitig eine Kühlung dieses Reaktors möglich.

Die Reformereinheit umfasst auch einen Gegenstromwärmetauscher mit einem Wärmetauscher aus einem Innenrohr zur Aufnahme eines wärmeabgebenden Fluids und einem das Innenrohr umgebenden Ringspaltrohr zur Aufnahme des zu erwärmenden Fluids, auch als Spiraldoppelrohr oder Koaxialwärmetauscher bezeichnet, und einem den Wärmetauscher umgebenden Außenrohr, wobei das Edukt in dem Ringspaltrohr im Gegenstrom zum im Innenrohr geführten Produktgas und im Gegenstrom zum das Ringspaltrohr außen umströmenden Rauchgas und aus diesem Wärmetauscher, gegebenenfalls über einen über einen weiteren Wärmetauscher, dem Reformerbereich zu katalytischen Umsetzung zugeführt wird). Das den Koaxialwärmetauscher umgebende Außenrohr kann in Form des Reaktorbehälters ausgebildet sein.

Hierbei ist der Koaxialwärmetauscher, vorzugsweise mit koaxial beabstandeten Windungen im Reaktorbehälter vorzugsweise so angeordnet, dass das aus dem Brennerraum abgeführte heiße Rauchgas den Koaxialwärmetauscher zumindest in dem Spiraldoppelrohrzwischenraum umströmt. In einer Ausführung ist das Spiraldoppelrohr um einen Shiftreaktor, der bevorzugt als Niedertemperatur-shiftreaktor ausgeführt ist, angeordnet.

In einer anderen Ausführungsform des Gegenstromwärmetauschers ist dieser ausgebildet in Form eines Gegenstromwärmetauschers mit einem Hohlzylinderblock mit zwei Hohlzylindern, die bei gleicher axialer Länge einen unterschiedlichen Durchmesser besitzen und ineinander gesteckt angeordnet sind, und mit einem Spiralrohr zur Aufnahme eines wärmeaufnehmenden Fluids, wobei das Spiralrohr in dem zylindrischen Ringspalt zwischen den beiden Hohlzylindern angeordnet ist und das Spiralrohr an deren Außen- bzw. Innenwand dicht anliegt.

Dabei ist der zylindrische Ringspalt zwischen den Hohlzylindern endseitig beiderseits durch eine ringförmige Abschlussplatte verschlossen, und in den Abschlussplatten sind jeweils mindestens eine Zu- bzw. Abführung für die im Gegenstrom geführten Fluide in das Spiralrohr bzw. den zylindrischen Ringspalt vorhanden.

Den Hohlzylinderblock beabstandet umgebend ist ein Außenrohr mit Zu- und Abführung zur Aufnahme eines weiteren wärmeabgebenden Fluids vorgesehen, wobei jeweils Zu- bzw. Abführungen für die wärmeabgebenden Fluide und das wärmeaufnehmende Fluid in die jeweiligen Kompartimente vorgesehen sind und wobei das zu erwärmende Fluid in dem Ringspaltrohr im Gegenstrom zu beiden wärmeabgebenden Fluiden geführt wird.

Die Außenseite des Hohlzylinderblocks wird mit dem heißen Rauchgas beaufschlagt, was zu einem weiteren Wärmetausch mit dem Inneren des Doppelzylinders führt.

Konventionell werden in Wasserstofferzeugungsanlagen zwei Shiftreaktoren auf unterschiedlichen Temperaturniveaus zur Umsetzung des Kohlenmonoxids mit Wasser zu Kohlendioxid und Wasserstoff eingesetzt. Häufig genannte Gründe dafür sind eine höhere Reaktionsgeschwindigkeit bei höherer Temperatur (~400 °C) und ein weiter auf der CO₂-Seite liegendes Gleichgewicht bei geringerer Temperatur (~200 °C). Außerdem wird bei der exothermen Reaktion durch die Verwendung eines Hochtemperaturshift-Reaktors (HT-Shiftreaktor) die Wärme auf einem höheren Temperaturniveau frei und kann dadurch großtechnisch besser nutzbar gemacht werden.

In dem erfindungsgemäßen kompakten Dampfreformer kann bevorzugt auf einen HT-Shiftreaktor zur Bauvolumenreduktion und zur Vereinfachung der Wärmeintegration verzichtet werden. Die sonst auf zwei Reaktoren verteilte Wärme wird so in einem Reaktor frei und kann besser genutzt werden. Beim Weglassen des Hochtemperaturshiftes vereinfacht sich außerdem die Regelung der Anlage, da ein Temperaturwert weniger überwacht und geregelt werden muss. Des Weiteren ist bei der Inbetriebnahme von Eisen/Chrom-haltigen HT-Shift-Katalysators wegen der Entfernung der anfänglichen Schwefelbeladung eine Bypassleitung um den NT-Shiftreaktors vorzusehen, damit der NT-Shift-Katalysator nicht vergiftet wird. Auf diese zusätzliche Leitung und entsprechende Regelung kann bei der beschriebenen bevorzugten Ausgestaltung des Dampfreformers verzichtet werden.

Nachfolgend soll die Erfindung an Hand von Zeichnungen näher erläutert werden. Dabei zeigen:
- Fig.1: eine schematische Darstellung der Reformereinheit zur Wasserstofferzeugung mittels Wasserdampf-reformierung von Kohlenwasserstoffen;
- Fig.2: eine schematische Darstellung der Erwärmung des Eduktgemisches durch das heiße Rauchgas und Produktgas (Reformat) gemäß der Erfindung;
- Fig.3: die verfahrenstechnische Verschaltung der Reformereinheit.

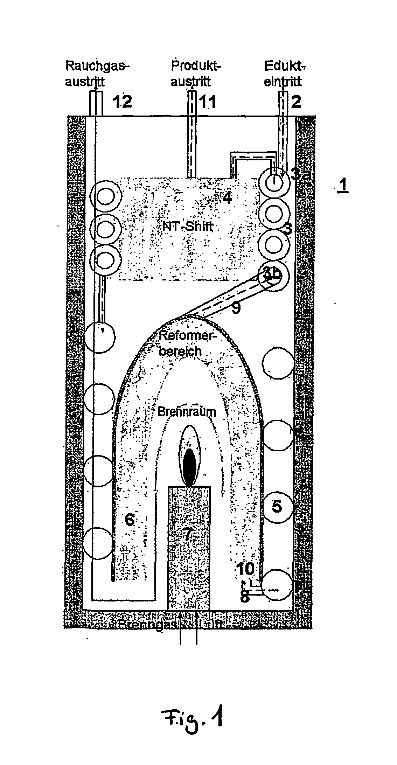

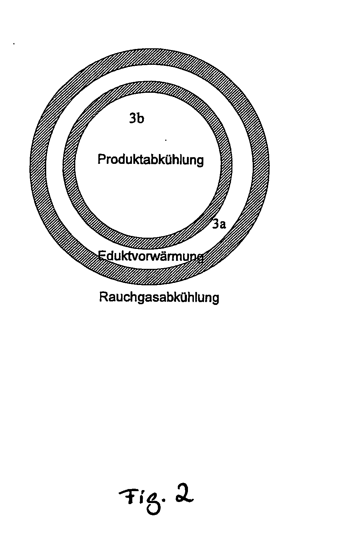

Bei der Ausführungsform nach Fig. 1 weist die zylindrische Reformereinheit 1 eine Edukteintrittsleitung 2 auf. Über die Leitung 2 werden der zu reformierende Kohlenwasserstoff und flüssiges Wasser in einem voreingestellten S/C-Verhältnis in den Ringspalt 3a des Koaxialwärmetauschers 3 geleitet. Die Koaxialwärmetauscherwendel 3 ist konzentrisch um den Niedertemperaturshiftreaktor 4 herum angeordnet.

Im inneren Rohr 3b der koaxialen Wärmetauscherwendel wird das aus dem Reformerbereich kommende heiße Reformat im Gegenstrom zum Eduktgemisch geführt, während die Koaxialwärmetauscherwendel von:außen mit dem heißen Rauchgas umströmt wird. In dem genannten Koaxialwärmetauscher erfolgt somit die Vorwärmung und Verdampfung der Edukte im Ringspalt durch die gleichzeitige Kühlung des Reformates von innen und durch die Absenkung der Rauchgastemperatur auf der Außenseite. In der gezeigten Bauform wird das Eduktgemisch sowohl in Bezug auf das Reformat als auch auf das Rauchgas im Gegenstrom geführt.

Nach Durchströmen der Koaxialwärmetauscherwendel 3 wird das Edukt in eine weitere Rohrwendel 5, die konzentrisch um den Reformerraum 6 und Brenner 7 angeordnet ist, geleitet. Das Eduktgemisch wird durch das an der Außenseite der Rohrwendel im Gegenstrom vorbeiströmende heiße Rauchgas weiter erwärmt und über das Gasverteilerrohr 8 in den Reformerraum 6 geleitet.

Nach Durchströmen des Reformerraumes 6 gelangen die reformierten Edukte in den oberen Reformerbereich und werden über die Rohrleitung 9 abgezogen und dem inneren Rohr 3b der Koaxialwärmetauscherwendel 3 zugeführt.

Der Reformerraum 6 ist hier bevorzugt als konzentrischer Ringspalt um den Brenner 7 ausgebildet, der nach oben durch einen Dom, z.B. in Form eines Klöpperbodens, oder aber in Form einer ebenen Kreisscheibe begrenzt ist. Der Querschnitt des oberen Reformerbereiches ist kreisförmig ausgestaltet. Im Eintrittsbereich des Reformers wird zur gleichmäßigen Gasverteilung über dem Strömungsquerschnitt ein Freivolumen 10 vorgesehen. Dies kann konstruktiv durch einen Siebboden, der das Katalysatormaterial trägt, geschehen.

Der Reformerbereich kann in einen Prereformerbereich und einen Hauptreformerbereich untergliedert werden, in denen unterschiedliche Katalysatoren, die in den vorherrschenden Temperaturen aktiv sind, zum Einsatz kommen können. Die unterschiedlichen Katalysatoren können zudem durch katalytisch nicht aktive Blindschüttungen oder durch weitere Siebböden getrennt werden. Aufgrund dieser Temperaturverteilung wird der Prereformer im Eintrittsbereich und der Hauptreformer im Austrittsbereich eingesetzt. Beide Katalysatoren können z.B. Pt oder Ni enthalten und aus einer Schüttung oder einer beschichteten Wabe bestehen.
Die Rohrleitung 9 kann zentral in der Mitte des oberen Reformerbereiches oder aber auch radial angeordnet sein.

Dem Brenner 7 werden Erdgas, beziehungsweise ein wasserstoffhaltiges Anodenabgas einer Brennstoffzelle, und Luft über nicht dargestellte Brenngaszuführung und Luftzuführung zugeführt. Das bei der Verbrennung entstehende Rauchgas dient zur Beheizung des Reformerraumes.

Die zylindrische Reformereinheit 1 und der Reformerbereich 6 sind vorzugsweise mit einer Isolationsschicht zur thermischen Isolierung versehen.

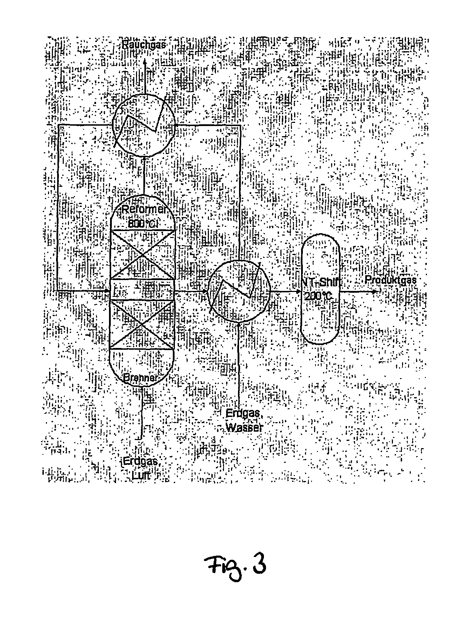

Die koaxiale Wärmetauscherspirale 3 besteht gemäß Figur 2 aus einem inneren Rohr 3b in dem das den Reformer 6 verlassende Reformat abgekühlt wird und einem äußeren Rohr 3a, dass das kalte Edukt (Kohlenwasserstoff-Wasser-Gemisch) führt. Um das äußere Rohr 3b strömt Rauchgas, das zu einer zusätzlichen Vorwärmung des Eduktes führt. Dieser zweifache Wärmetausch von Eduktgemisch zum wasserstoffhaltigen Reformat und zum Rauchgas kann jeweils im Gleichstrom oder bevorzugt im Gegenstrom erfolgen. Der Vorteil der dargestellten Konstruktion liegt in einer geringen Baugröße.

Obgleich in der Figur 1 eine Reformereinheit mit Reformer und einem darauf in der Reformatweiterführung nachfolgenden Niedertemperaturshiftreaktor, der üblicherweise-im Temperaturbereich zwischen 180° und 250°C betrieben wird, dargestellt ist, ist es auch möglich, oder auch je nach den Verhältnissen erforderlich, zwischen den Reformer und den Niedertemperaturshiftreaktor einen weiteren Shiftreaktor, der als Niedertemperatur- oder Hochtemperaturshiftreaktor, der üblicherweise im Temperaturbereich zwischen 350° und 500°C betrieben wird, ausgeführt sein kann, vorzusehen. In diesem Fall wird Reformat aus dem Reformierraum in diesen ersten Shiftreaktor_geleitet und im Gegenstrom zum schon vorerhitzten Edukt zum Niedertemperaturshiftreaktor geleitet, wobei die Führung von Edukt, Reformat und Rauchgas bevorzugt entsprechend der Führung beim Niedertempearturshiftreaktor wie oben dargestellt ausgeführt ist.

### Bezugszeichenliste

Reformereinheit 1
Edukteintrittsleitung 2
Koaxialwärmetauscher 3
mit Ringspaltrohr 3a und innerem Rohr 3b
Shiftreaktor 4
Rohrwendel 5,
Reformerraum 6
Brenner 7
Gasverteilerrohr 8
Rohrleitung 9
Freivolumen 10

## Patentansprüche

1. Reformereinheit zur Wasserstofferzeugung aus einem Edukt aus einem Kohlenwasserstoff-Wasser-Gemisch mit:
a. einem Reaktorbehälter (1);
b. einer Zuführungsleitung (2) zur Zuführung eines Eduktes in den Reaktorbehälter (1);
c. einem an der Eduktzuführungsleitung (2) angeschlossenen Wärmetauscher (3) als Koaxialwärmetauscher mit einem ersten, äußeren Rohr (3a), das an der Zuführungsleitung (2) angeschlossen ist, und einem zweiten, inneren Rohr (3b);
d. einem weiteren, an dem ersten Rohr (3a) des Wärmetauschers (3) angeschlossenen Wärmetauscher (5), der um einen Reformierraum (6) angeordnet ist;
e. einer an dem Wärmetauscher (5) angeschlossenen Leitung (8) mit mindestens einer Austrittsöffnung zur Zuführung des gasförmigen Eduktes in den Reformerraum (6) mit einer darin angeordneten Katalysatoreinheit, die von einem Brenner (7) erhitzbar ist;
f. mindestens einer Abführungsleitung (9) für das Abführen des im Reformierraum (6) gebildeten Reformates zum zweiten Rohr (3b) des Wärmetauschers (3), das anderenends an einem Shiftreaktor (4), angeschlossen ist; sowie
g. einer Produktabführungsleitung (11) für das aus dem Shiftreaktor (4) abgeführte Produktgas und mindestens einer Abführungsleitung (12) für das Rauchgas aus dem Reaktorbehälter (1).

2. Reformereinheit nach Anspruch 1, **dadurch gekennzeichnet, dass** der an der Eduktzuführungsleitung (2) angeschlossene Koaxialwärmetauscher (3) von einem Außenrohr zur Aufnahme eines weiteren wärmeabgebenden Fluids umgeben ist, wobei jeweils die Zu- bzw. Abführungen für die wärmeabgebenden Fluide und das wärmeaufnehmende Fluid in die jeweiligen Rohre so angeschlossen sind, dass das zu erwärmende Fluid in dem Rohr (3a) im Gegenstrom zu beiden wärmeabgebenden Fluiden geführt wird.

3. Reformereinheit nach Anspruch 1, **dadurch gekennzeichnet, dass** der an der Eduktzuführungsleitung (2) angeschlossene Wärmetauscher (3) ein Gegenstromwärmetauscher ist, der einen Hohlzylinderblock mit zwei Hohlzylindern, die bei gleicher axialer Länge einen unterschiedlichen Durchmesser besitzen und ineinander gesteckt angeordnet sind, und ein Spiralrohr zur Aufnahme eines wärmeaufnehmenden Fluids aufweist, wobei das Spiralrohr in dem zylindrischen Ringspalt zwischen den beiden Hohlzylindern angeordnet ist und an deren Außen- bzw. Innenwand das Spiralrohr dicht anliegt, wobei der zylindrische Ringspalt zwischen den Hohlzylindern endseitig beiderseits durch eine ringförmige-Abschlussplatte verschlossen ist und in den Abschlussplatten jeweils mindestens eine Zu- bzw. Abführung für die im Gegenstrom geführten Fluide in das Spiralrohr bzw. den zylindrischen Ringspalt vorhanden sind.

4. Reformereinheit nach einem der vorhergehenden Ansprüche, **dadurch gekennzeichnet, dass** der an der Eduktzuführungsleitung (2) angeschlossene Wärmetauscher (3) um den Shiftreaktor (4), der bevorzugt als Niedertemperaturshiftreaktor ausgeführt ist, angeordnet ist.

5. Reformereinheit nach einem der vorhergehenden Ansprüche, **dadurch gekennzeichnet, dass** die Leitung (8) mehrere Austrittsöffnungen oder einen Spalt zur Zuführung des gasförmigen Eduktes in den Reformerraum (6) aufweist.

6. Reformereinheit nach einem der vorhergehenden Ansprüche, **dadurch gekennzeichnet, dass** die Produktaustrittsleitung (11) an einer Einheit zur Reinigung des Produktgases, vorzugsweise zur Reduktion des CO-Gehaltes im Produktgas, angeschlossen ist.

## Claims

1. Reformer unit for producing hydrogen from an educt comprising an admixture of hydrocarbons and water having:
a. a reactor container (1);
b. a supply line (2) for supplying an educt to the reactor container (1);
c. a heat exchanger (3) which is connected to the educt supply line (2) and which is in the form of a coaxial heat exchanger having a first outer pipe (3a) which is connected to the supply line (2), and a second inner pipe (3b);
d. an additional heat exchanger (5) which is connected to the first pipe (3a) of the heat exchanger (3) and which is arranged around a reformer space (6);
e. a line (8) which is connected to the heat exchanger (5) and which has at least one outlet opening for supplying the gaseous educt to the reformer space (6), having a catalyst unit which is arranged therein and which can be heated by a burner (7);
f. at least one discharge line (9) for discharging the reformate formed in the reforming space (6) to the second pipe (3b) of the heat exchanger (3) which is connected to a shift reactor (4) at the other end; and
g. a product discharge line (11) for the product gas discharged from the shift reactor (4) and at least one discharge line (12) for the combustion gas from the reactor container (1).

2. Reformer unit according to Claim 1, **characterised in that** the coaxial heat exchanger (3) which is connected to the educt supply line (2) is surrounded by an outer pipe for receiving an additional heat-dissipating fluid, with the inlets and/or outlets for the heat-dissipating fluids and the heat-absorbing fluid to/from the pipes being respectively connected in such a manner that the fluid to be heated is guided in the pipe (3a) in counter-current with respect to the two heat-dissipating fluids.

3. Reformer unit according to Claim 1, **characterised in that** the heat exchanger (3) which is connected to the educt supply line (2) is a counter-current heat exchanger which has a hollow cylinder unit having two hollow cylinders, which have a different diameter with the same axial length and which are arranged so as to be fitted one in the other, and a helical pipe for receiving a heat-absorbing fluid, the helical pipe being arranged in the cylindrical annular gap between the two hollow cylinders and the helical pipe closely adjoining the respective outer and inner wall thereof, the cylindrical annular gap between the hollow cylinders being closed at each of the two ends by an annular closure plate and there being provided in each of the closure plates at least an inlet and/or outlet for the fluids which are guided in counter-current to/from the helical pipe and/or the cylindrical annular gap, respectively.

4. Reformer unit according to any one of the preceding claims, **characterised in that** the heat exchanger (3) which is connected to the educt supply line (2) is arranged around the shift reactor (4) which is preferably in the form of a low-temperature shift reactor.

5. Reformer unit according to any one of the preceding claims, **characterised in that** the line (8) has a plurality of outlet openings or a gap for supplying the gaseous educt to the reformer space (6).

6. Reformer unit according to any one of the preceding claims, **characterised in that** the product discharge line (11) is connected to a unit for cleaning the product gas, preferably for reducing the CO content in the product gas.

## Revendications

1. Unité de reformage pour la production d'hydrogène à partir d'un éduit d'un mélange hydrocarbures-eau, comprenant :
a. un récipient de réacteur (1);
b. une conduite d'alimentation (2) pour acheminer un éduit dans le récipient de réacteur (1);
c. un échangeur de chaleur (3) raccordé à la conduite d'alimentation (2) de l'éduit comme échangeur de chaleur coaxial avec un premier tube externe (3a) raccordé à la conduite d'alimentation (2) et un second tube interne (3b);
d. un autre échangeur de chaleur (5) qui est raccordé au premier tube (3a) de l'échangeur de chaleur (3) et agencé autour d'un espace de reformage (6);
e. une conduite (8) raccordée à l'échangeur de chaleur (5), ayant au moins une ouverture de sortie pour acheminer l'éduit gazeux dans l'espace de reformage (6), comportant une unité catalytique qui est agencée à l'intérieur et peut être chauffée par un brûleur (7);
f. au moins une conduite d'évacuation (9) pour évacuer le reformat formé dans l'espace de reformage (6) vers le second tube (3b) de l'échangeur de chaleur (3) qui est raccordé à l'autre extrémité à un réacteur de conversion (4); et
g. une conduite d'évacuation de produit (11) pour le gaz produit évacué du réacteur de conversion (4) et au moins une conduite d'évacuation (12) pour le gaz de fumée hors du récipient de réacteur (1).

2. Unité de reformage selon la revendication 1, **caractérisée en ce que** l'échangeur de chaleur (3) coaxial raccordé à la conduite d'alimentation (2) de l'éduit est entouré d'un tube externe pour la réception d'un autre fluide exothermique, dans laquelle les alimentations ou les évacuations pour les fluides exothermiques et le fluide endothermique dans les tubes respectifs sont raccordées respectivement de manière à conduire le fluide à chauffer dans le tube (3a) à contre-courant des deux fluides exothermiques.

3. Unité de reformage selon la revendication 1, **caractérisée en ce que** l'échangeur de chaleur (3) raccordé à la conduite d'alimentation (2) de l'éduit est un échangeur de chaleur à contre-courant qui présente un bloc de cylindres creux avec deux cylindres creux qui possèdent un diamètre différent pour une même longueur axiale et qui sont insérés l'un dans l'autre, et un tube spiralé pour recevoir un fluide endothermique, le tube spiralé étant agencé dans la fente annulaire cylindrique entre les deux cylindres creux et appliqué de manière étanche sur leur paroi externe ou interne, la fente annulaire cylindrique entre les deux cylindres creux étant fermée aux deux extrémités par une plaque de fermeture annulaire et, dans les plaques de fermeture, au moins une alimentation ou une évacuation étant respectivement présente pour les fluides conduits à contre-courant dans le tube spiralé ou la fente annulaire cylindrique.

4. Unité de reformage selon l'une quelconque des revendications précédentes, **caractérisée en ce que** l'échangeur de chaleur (3) raccordé à la conduite d'alimentation (2) de l'éduit est agencé autour du réacteur de conversion (4) qui se présente de préférence sous la forme d'un réacteur de conversion à basse température.

5. Unité de reformage selon l'une quelconque des revendications précédentes, **caractérisée en ce que** la conduite (8) présente plusieurs ouvertures de sortie ou une fente pour acheminer l'éduit gazeux dans l'espace de reformage (6).

6. Unité de reformage selon l'une quelconque des revendications précédentes, **caractérisée en ce que** la conduite de sortie de produit (11) est raccordée à une unité pour purifier le gaz produit, de préférence pour réduire la teneur en CO dans le gaz produit.
